Europäisches Patentamt

European Patent Office

Office européen des brevets

(11) Numéro de publication: **0 426 587 A1**

## DEMANDE DE BREVET EUROPEEN

(21) Numéro de dépôt: 90420475.7

(22) Date de dépôt: 31.10.90

(51) Int. Cl.⁵: **F16K 31/60, F16K 11/074**

(30) Priorité: 31.10.89 FR 8914728

(43) Date de publication de la demande:
08.05.91 Bulletin 91/19

(84) Etats contractants désignés:
**AT BE CH DE DK ES FR GB GR IT LI LU NL SE**

(71) Demandeur: **Les Mitigeurs ERAM**
**76-80, rue des Rancy**
**F-69003 Lyon(FR)**

(72) Inventeur: **Laurent, René**
**47 Avenue Paul Santy**
**F-69008 Lyon(FR)**
Inventeur: **Delarue, Emmanuel**
**17 rue Villon**
**F-69330 Meyzieu(FR)**

(74) Mandataire: **Maureau, Philippe et al**
**Cabinet GERMAIN & MAUREAU BP 3011**
**F-69392 Lyon Cédex 03(FR)**

(54) Mitigeur d'eau pour installation sanitaire.

(57) Mitigeur comportant une cartouche contenant un disque fixe (14) plaqué contre le fond et présentant trois ouvertures, respectivement, d'amenée d'eau froide, d'amenée d'eau chaude et de sortie du mélange, sur lequel est monté, en contact étanche et avec possibilité de glissement, un second disque (19) comportant une ouverture (20) dont la position relativement aux ouvertures du premier disque permet ou non le passage d'eau depuis les ouvertures d'entrée vers l'ouverture de sortie.

Selon l'invention, il comporte un levier (27) monté pivotant autour d'un axe (26) parallèle aux plateaux (14, 19) et fixe relativement à la cartouche (8) dont l'extrémité logée à l'intérieur de celle-ci assure le déplacement du second plateau dans le plan de débattement du levier, le levier comportant un passage axial (28) destiné au passage d'une tige (29) dont l'extrémité inférieure est associée au second plateau pour assurer le réglage angulaire de celui-ci depuis l'extrémité de la tige dépassant du levier.

FIG.1

EP 0 426 587 A1

## MITIGEUR D'EAU POUR INSTALLATION SANITAIRE

La présente invention a pour objet un mitigeur d'eau pour installation sanitaire.

Un mitigeur d'eau est un appareil relié d'une part à une arrivée d'eau chaude et d'autre part à une arrivée d'eau froide, susceptible de réaliser le mélange des deux courants d'eau chaude et d'eau froide avec dosage de ceux-ci pour réaliser le réglage de la température et le réglage du débit du mélange. .

Généralement un mitigeur comprend une cartouche dont le fond présente trois ouvertures respectivement d'amenée d'eau froide, d'amenée d'eau chaude et de sortie du mélange.

Dans le fond de la cartouche est disposé un premier disque par exemple en céramique, bloqué en rotation, comportant trois ouvertures en regard respectivement des amenées d'eau froide et d'eau chaude et de la sortie du mélange. Sur ce premier disque est monté, avec contact étanche, un second disque de diamètre inférieur à celui du premier, susceptible d'être déplacé entre une position dans laquelle il empêche toute communication entre les entrées d'eau et la sortie du mélange, et d'autres positions dans lesquelles il permet un tel passage avec des sections réglables, permettant d'obtenir le débit souhaité.

L'actionnement du second disque par rapport au premier est obtenu par actionnement d'un levier, lequel levier est monté articulé autour d'un axe parallèle au plan des disques, ce qui permet par basculement du levier d'obtenir une première latitude de déplacement du disque mobile, la pièce dans laquelle est monté l'axe du levier étant elle-même pivotante autour d'un axe perpendiculaire aux disques. Un seul et même mouvement de levier permet donc de réaliser à la fois le réglage du débit d'eau et le réglage de la température du mélange. Si, en théorie, cette solution apparaît séduisante, elle pose en pratique de nombreux problèmes car l'utilisateur a tendance à manipuler le levier de manoeuvre de façon désordonnée, ce qui lui pose des difficultés d'une part pour obtenir le débit souhaité, et d'autre part, pour obtenir la température souhaitée.

La présente invention vise à remédier à ces inconvénients en fournissant un mitigeur d'eau, de conception simple, qui soit d'une utilisation très pratique, et qui permette à l'aide d'un même organe de manoeuvre le réglage du débit du mélange et le réglage de la température du mélange d'eau, au cours de deux opérations séparées.

A cet effet, le mitigeur qu'elle concerne, du type comprenant une cartouche cylindrique dont une extrémité est ouverte et dont l'autre extrémité constitue un fond dans lequel sont ménagés trois orifices respectivement d'amenée d'eau froide, d'amenée d'eau chaude et de sortie d'eau mélangée, cette cartouche contenant un disque fixe plaqué contre le fond et présentant trois ouvertures respectivement d'amenée d'eau froide, d'amenée d'eau chaude et de sortie du mélange, sur lequel est monté, en contact étanche et avec possibilité de glissement, un second disque comportant une ouverture dont la position relativement aux ouvertures du premier disque permet ou non le passage d'eau depuis les ouvertures d'entrée vers l'ouverture de sortie, est caractérisé en ce qu'il comporte un levier monté pivotant autour d'un axe parallèle aux plateaux et fixe relativement à la cartouche dont l'extrémité logée à l'intérieur de celle-ci assure le déplacement du second plateau dans le plan de débattement du levier, le levier comportant un passage axial destiné au passage d'une tige dont l'extrémité inférieure est associée au second plateau pour assurer le réglage angulaire de celui-ci depuis l'extrémité de la tige dépassant du levier.

L'actionnement du levier pivotant permet de réaliser le réglage du débit et seulement le réglage du débit. Pour réaliser le réglage de la température d'eau mélangée, il suffit d'actionner en rotation la tige traversant le levier. Lorsqu'une température d'eau prédéterminée est réglée, il suffit à l'utilisateur d'actionner le levier de réglage du débit, la tige demeurant dans une position correspondant à des rapports d'eau chaude et d'eau froide, permettant l'obtention d'un mélange de température donnée.

Selon une forme d'exécution de ce mitigeur le second disque est équipé, sur sa face opposée au premier disque, d'un couvercle qui en est solidaire, ce couvercle comportant, débouchant dans sa face opposée au disque, un évidement de forme générale rectangulaire, dans lequel est engagé un embout solidaire de l'extrémité basse de la tige traversant le levier, cet embout comportant deux faces parallèles en appui contre les deux parois longitudinales de l'évidement, et deux faces profilées destinées à venir en appui contre les autres parois de l'évidement.

Avantageusement, la cartouche et le levier qui lui est associé sont logés à l'intérieur d'un corps en deux parties dont celle inférieure contient la cartouche et dont celle supérieure contient l'extrémité supérieure du levier, la partie supérieure étant montée déplaçable par rapport à la partie inférieure dans un plan parallèle aux disques et dans une direction contenue dans le plan de débattement du levier, la partie supérieure du corps étant associée à un organe pivotant solidaire en rotation de la tige traversant le levier. Dans un tel cas le mouvement du réglage du débit est obtenu par un mouvement de coulissement, très simple à réaliser, tandis que le mouvement de réglage de la température est obtenu par un mouvement de rotation.

Afin de limiter l'encombrement du mitigeur dans ce dernier cas, la partie supérieure de la tige traversant le levier comporte un renvoi d'angle, permettant l'engagement de l'extrémité libre de cette tige, de section carrée, à l'intérieur d'une cavité complémentaire ménagée dans une partie d'un bouton de manoeuvre faisant saillie à l'intérieur de la partie supérieure du corps.

Selon un mode simple de mise en oeuvre le renvoi d'angle de la partie supérieure de la tige est constitué par un ressort hélicoïdal à spires serrées.

De toute façon l'invention sera bien comprise à l'aide de la description qui suit, en référence au dessin schématique annexé, représentant à titre d'exemple non limitatif, une forme d'exécution de ce mitigeur :

Figure 1 est une vue en perspective éclatée, partiellement en coupe, des principaux éléments constitutifs de ce mitigeur ;

Figures 2 à 4 en sont trois vues en coupe longitudinale, respectivement en position de fermeture et dans deux positions d'ouverture ;

Figures 5 à 7 sont trois vues de dessous de la cartouche dans des positions correspondant respectivement aux trois positions de figures 2 à 4.

Le mitigeur représenté au dessin comprend un corps en deux parties 2 et 3 toutes deux cylindriques, et superposées, la partie supérieure 3 étant montée déplaçable en translation dans un plan perpendiculaire à l'axe du corps, le guidage de cette partie 3 sur la partie inférieure 2 étant réalisé par exemple par un système à queue d'aronde. La partie supérieure 3 comporte un alésage central 4, et cette partie 3 est recouverte par un capuchon 5 comportant une partie centrale 6 en forme de cheminée faisant saillie à l'intérieur de l'alésage 4. Cette cheminée 6 délimite une ouverture 7 de section carrée.

A l'intérieur de la partie inférieure du corps, est disposée une cartouche cylindrique 8 dont l'extrémité supérieure est ouverte, et dont l'extrémité inférieure fermée constitue un fond 9 dans lequel sont ménagées trois ouvertures 10, 12, et 13 correspondant respectivement aux amenées d'eau froide et d'eau chaude, et à la sortie d'eau mélangée. A l'intérieur de la cartouche 8, est disposé, contre le fond de celle-ci, un disque 14 par exemple en céramique, comportant des encoches périphériques 15 coopérant avec des doigts en saillie que présente la cartouche pour assurer un blocage en rotation. Ce disque 14 comprend trois ouvertures 16, 17 et 18, disposées en regard respectivement des ouvertures 10, 12 et 13 du fond de la cartouche. Sur le disque 14 est disposé un second disque 19 en céramique, de diamètre inférieur à celui du disque 14, comportant une ouverture unique 20. Cette ouverture 20 peut être amenée soit en regard seulement de l'ouverture 18 en position de fermeture du mitigeur, soit en regard des ouvertures 16, 17 et 18 en position ouverte du mitigeur, avec possibilité de modification des sections de passage au niveau des différents orifices.

Le disque 19 est équipé d'un couvercle 22 qui en est rendu solidaire, dans lequel est ménagé un évidement 23 de forme rectangulaire, comportant notamment deux parois longitudinales 24 parallèles l'une à l'autre.

La cartouche 8 est fermée par une pièce de fermeture 25 bloquée en rotation sur la cartouche, et contenant un axe 26 parallèle aux disques 14 et 19.

L'axe 26 sert à l'articulation d'un levier 27. Ce levier 27 comporte un passage 28 axial servant au montage d'une tige 29 avec possibilité de pivotement de la tige dans le passage. L'extrémité basse de la tige 29 est équipée d'un embout 30 comportant deux faces parallèles 32 destinées à venir en contact avec les parois 24 de l'évidement 23, et deux autres faces 33 profilées destinées à venir prendre appui contre les deux autres faces de l'évidement 23. Dans sa partie dépassant du passage 28, la tige 29 est raccordée à un ressort 34 à spires serrées, dont l'extrémité supérieure est solidaire d'un embout 35 de section carrée, destiné à être engagé avec ajustement dans l'évidement 7 du bouton de commande 5.

L'actionnement du levier par basculement autour de l'axe 26 est destiné à provoquer le réglage du débit, et le seul réglage du débit, le réglage de la température du mélange étant réalisé en provoquant un pivotement du disque 19 par pivotement de la tige 29, à partir d'un mouvement de rotation exercé sur le bouton de manoeuvre 5.

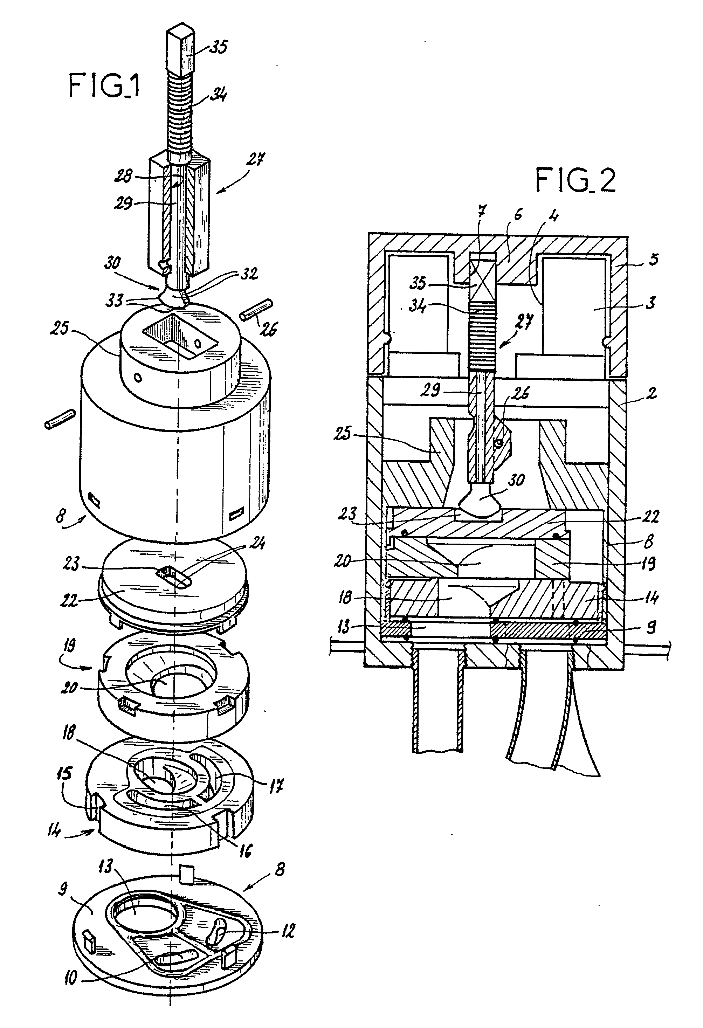

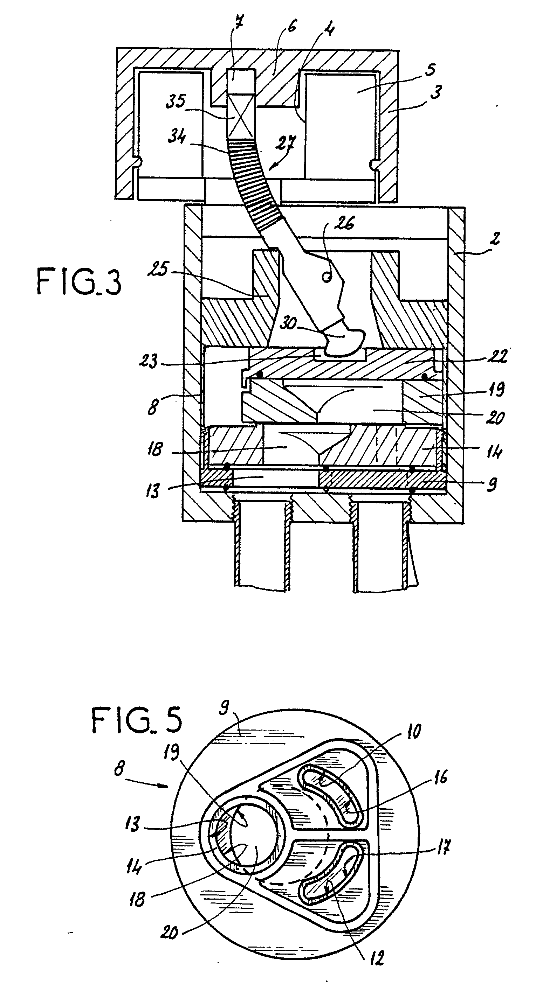

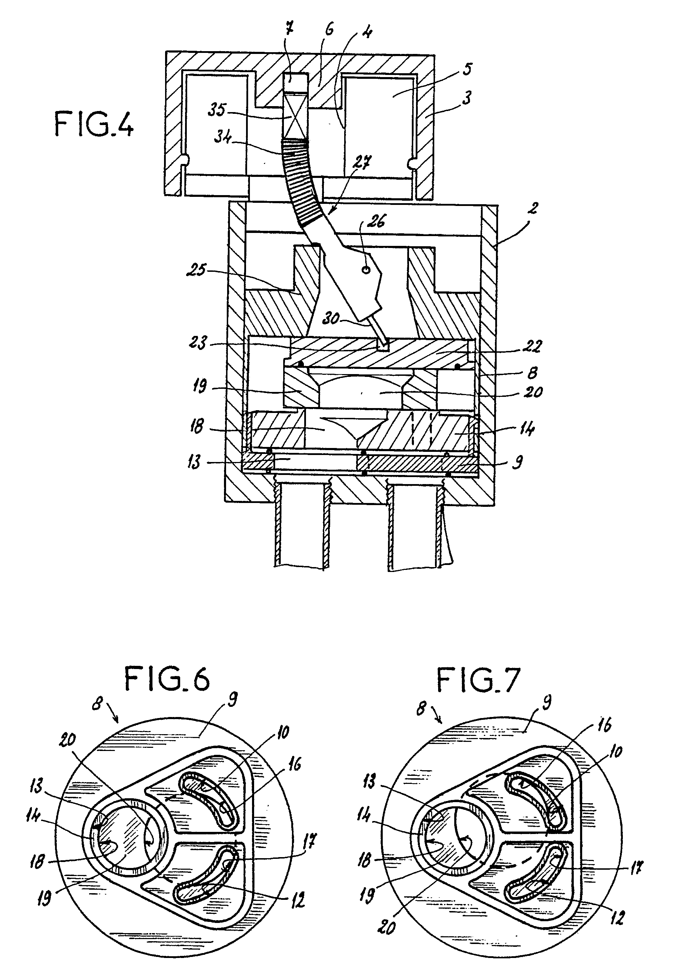

Les figures 2 et 5 représentent ce mitigeur en position de fermeture. Pour passer en position d'ouverture, il suffit à l'utilisateur d'exercer un mouvement sur la partie supérieure 3 du corps pour déplacer selon un mouvement de translation celle-ci par rapport à la partie inférieure du corps. Au cours de ce mouvement, le disque 19 coulisse sur le disque 14, en découvrant au moins partiellement les ouvertures 16 et 17. Dans la forme d'exécution représentée aux figures 2 et 3 auxquelles correspondent les figures 5 et 6, le disque 19 est centré par rapport au disque 14, de façon à découvrir également les ouvertures 16 et 17. Pour réaliser une modification de la température d'eau du mélange, il suffit d'exercer une action de rotation sur le bouton de manoeuvre 5, cette rotation étant transmise à la tige 29, qui par l'intermédiaire de l'embout 30 entraîne en rotation le couvercle 22, et par suite le disque 19, comme montré aux figures 4 et 7.

Le mitigeur peut éventuellement être ramené en position de fermeture par un simple mouvement de translation de la partie supérieure du corps, à partir de la position de figure 4 et 7, de telle sorte que le réglage de température correspondant à cette position est mémorisé.

Comme il ressort de ce qui précède, l'invention apporte une grande amélioration à la technique existante en fournissant un mitigeur de conception simple permettant de dissocier les fonctions de réglage du débit et de réglage de la température, tout en étant d'une utilisation très pratique.

Comme il va de soi, l'invention ne se limite pas à la seule forme d'exécution de ce mitigeur décrite ci-dessus à titre d'exemple ; elle en embrasse, au contraire, toutes les variantes de réalisation. C'est ainsi notamment, que la forme du corps pourrait ne pas être cylindrique, ou encore que les moyens constitutifs du renvoi d'angle du levier pourraient être différents, sans que l'on sorte pour autant du cadre de l'invention.

**Revendications**

1. Mitigeur d'eau pour installation sanitaire, du type comprenant une cartouche cylindrique (8) dont une extrémité est ouverte et dont l'autre extrémité constitue un fond (9) dans lequel sont ménagés trois orifices respectivement d'amenée d'eau froide (10), d'amenée d'eau chaude (12) et de sortie d'eau mélangée (13), cette cartouche contenant un disque fixe (14) plaqué contre le fond et présentant trois ouvertures respectivement d'amenée d'eau froide, d'amenée d'eau chaude et de sortie du mélange, sur lequel est monté, en contact étanche et avec possibilité de glissement, un second disque (19) comportant une ouverture (20) dont la position relativement aux ouvertures du premier disque permet ou non le passage d'eau depuis les ouvertures d'entrée vers l'ouverture de sortie, caractérisé en ce qu'il comporte un levier (27) monté pivotant autour d'un axe (26) parallèle aux plateaux (14, 19) et fixe relativement à la cartouche (8) dont l'extrémité logée à l'intérieur de celle-ci assure le déplacement du second plateau dans le plan de débattement du levier, le levier comportant un passage axial (28) destiné au passage d'une tige (29) dont l'extrémité inférieure est associée au second plateau pour assurer le réglage angulaire de celui-ci depuis l'extrémité de la tige dépassant du levier.

2. Mitigeur d'eau selon la revendication 1, caractérisé en ce que le second disque (19) est équipé, sur sa face opposée au premier disque (14), d'un couvercle (22) qui en est solidaire, ce couvercle comportant, débouchant dans sa face opposée au disque, un évidement (23) de forme générale rectangulaire, dans lequel est engagé un embout (30) solidaire de l'extrémité basse de la tige traversant le levier, cet embout comportant deux faces parallèles (32) en appui contre les deux parois longitudinales (24) de l'évidement, et deux faces profilées (33) destinées à venir en appui contre les autres parois de l'évidement.

3. Mitigeur d'eau selon la revendication 2, caractérisé en ce que la cartouche (8) et le levier (27) qui lui est associé sont logés à l'intérieur d'un corps en deux parties dont celle inférieure (2) contient la cartouche et dont celle supérieure (3) contient l'extrémité supérieure du levier (27), la partie supérieure étant montée déplaçable par rapport à la partie inférieure dans un plan parallèle aux disques et dans une direction contenue dans le plan de débattement du levier, la partie supérieure du corps étant associée à un organe pivotant (5) solidaire en rotation de la tige traversant le levier.

4. Mitigeur d'eau selon la revendication 3, caractérisé en ce que la partie supérieure de la tige traversant le levier comporte un renvoi d'angle (34), permettant l'engagement de l'extrémité libre (35) de cette tige, de section carrée, à l'intérieur d'une cavité complémentaire (7) ménagée dans une partie d'un bouton de manoeuvre (5) faisant saillie à l'intérieur de la partie supérieure du corps.

5. Mitigeur d'eau selon la revendication 4, caractérisé en ce que le renvoi d'angle (34) de la partie supérieure de la tige est constitué par un ressort hélicoïdal à spires serrées.

FIG_1

FIG_2

FIG.3

FIG.5

FIG.4

FIG.6

FIG.7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 096 005  (ISLER)<br>* Page 7, ligne 7 - page 10, ligne 6 *<br>– – – | 1 | F 16<br>K 31/60<br>F 16 K 11/074 |
| A | WO-A-8 301 668  (PARKINSON)<br>* Page 6, ligne 10 - page 8, ligne 31 *<br>– – – | 1,2 | |
| A | EP-A-0 103 744  (PAWELZIK)<br>– – – – – | | |

| | DOMAINES TECHNIQUES RECHERCHES (Int. Cl.5) |
|---|---|
| | F 16 K |

Le présent rapport de recherche a été établi pour toutes les revendications

| Lieu de la recherche | Date d'achèvement de la recherche | Examinateur |
|---|---|---|
| La Haye | 01 février 91 | VERELST P.E.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons
-----------------------------------------------------------
& : membre de la même famille, document correspondant